# EUROPÄISCHE PATENTSCHRIFT

(11) **EP 0 800 468 B1**
(45) Veröffentlichungstag und Bekanntmachung des Hinweises auf die Patenterteilung: **17.01.2001**
(21) Anmeldenummer: 96945504.7
(22) Anmeldetag: 17.10.1996
(51) Int. Cl.: B60S 1/08

(54) **VERFAHREN UND SYSTEM ZUM BETREIBEN EINER SCHEIBENWISCHANLAGE**
METHOD AND DEVICE FOR OPERATING A WINDSCREEN WIPER ARRANGEMENT
PROCEDE ET SYSTEME SERVANT A FAIRE FONCTIONNER UN SYSTEME D'ESSUIE-GLACE

(30) Priorität: 27.10.1995 BR 9504893
(43) Veröffentlichungstag der Anmeldung: 15.10.1997
(73) Patentinhaber: ROBERT BOSCH GMBH, 70442 Stuttgart (DE)
(72) Erfinder: BERGER, Rainer, Josef, D-77830 Buehlertal (DE)
(86) Internationale Anmeldenummer: DE9601968
(87) Internationale Veröffentlichungsnummer: WO9715477

(56) Entgegenhaltungen:
- EP-A- 0 283 005
- EP-A- 0 748 728
- WO-A-97/03868
- DE-A- 3 628 497
- DE-A- 3 922 484
- DE-A- 4 136 724
- DE-A- 19 620 539
- DE-U- 9 213 454
- ELV-JOURNAL, Nr. 60, November 1988, Seiten 18-21, XP002017312 LEER: "PROZESSORGESTEUERTER WISCHER-INTERVALL-SCHALTER PWS 1"

## Beschreibung

### Stand der Technik

Bei herkömmlichen Systemen zum Betrieb einer Scheibenwischanlage ermöglicht ein Bedienhebel mit verschiedenen Schaltern dem Fahrzeugführer die Anwahl der Funktionen der Scheibenwischanlage, wie zum Beispiel Wischen mit hoher Geschwindigkeit, Wischen mit niedriger Geschwindigkeit, Intervallwischen mit bestimmten Zeitintervallen und Waschen der Windschutzscheibe.

Diese bekannten Systeme weisen Nachteile auf, die sich in einem komplizierten Bedienhebel und einer aufwendigen Verkabelung niederschlägt. Ebenfalls stimmt die eingestellte Wischgeschwindigkeit schwerlich mit der der Regenintensität angemessenen Geschwindigkeit überein.

In diesen bekannten Lösungen wird die Arbeitsgeschwindigkeit oder die Frequenz der Wischzyklen pro Zeiteinheit durch den Fahrzeugführer, mittels Auswahl einer bestimmten Stellung an dem Bedienelement, üblicherweise der bekannte an der Lenkkonsole montierte Bedienhebel, eingestellt. In diesen Fällen wird die Änderung der Arbeitsgeschwindigkeit unter der Bedingung der kontinuierlichen Betriebsart durch die Veränderung der Geschwindigkeit des Motors, mittels Einstellung des Bedienhebels, erreicht. Üblicherweise sind zwei Geschwindigkeiten für den kontinuierlichen Betrieb des Motors vorgesehen, eine hohe und eine niedrige, wobei die Letztere auch für die unterbrechende Betriebsart benutzt wird.

Auf diese Weise kann der Motor in der bisherigen Technik mit verschiedenen, üblicherweise zwei, Drehzahlen arbeiten, um die entsprechenden Betriebsarten zu gewährleisten, wenn im Sinne der Frequenz von Wischzyklen der Scheibenwischanlage eine Betriebsart eine niedrigere Drehzahl des Motors erfordert, wird dies durch Veränderung der Zeit des Stillstandes des Motors zwischen zwei aufeinanderfolgenden Zyklen erreicht. Die Veränderung der Betriebsgeschwindigkeit des Scheibenwischers wird über einem bestimmten Wert durch Veränderung der Drehzahl des Motors und unterhalb des erwähnten minimalen Drehzahlwertes des Motors durch die Veränderung der Zeit des Stillstandes desselben zwischen zwei aufeinanderfolgenden Zyklen in unterbrechender Betriebsart erreicht.

Außer den oben genannten Betriebseigenschaften zeigen die Scheibenwischer der bisherigen Technik eine andere Betriebseigenschaft, welche als Nachteil betrachtet werden kann. Die Einstellung der niedrigen Betriebsgeschwindigkeiten in der unterbrechenden Betriebsart wird mittels Auswahl der Zeit des Stillstands durch Einwirkung des Fahrzeugführers auf den Bedienhebel erreicht.

Nachdem die Auswahl der Geschwindigkeit erfolgt ist, muß der Fahrzeugführer das Eintreten zweier aufeinanderfolgender Betriebszyklen des Scheibenwischers abwarten, um zu überprüfen, ob sich die ausgewählte Zeit des Stillstandes (Betriebsgeschwindigkeit) in Übereinstimmung mit der Zeit, in der das Regenwasser die Windschutzscheibe bedeckt, befindet.

Im dem Fall, wenn sich die Auswahl in Abhängigkeit des Regens als unangebracht erweist, wird der Fahrzeugführer gezwungen sein, das Ende des zuvor ausgewählten Zyklus abzuwarten, damit sein neuer Befehl vom System erkannt wird. Auf diese Weise wählt der Fahrzeugführer eine Einstellung der Betriebsgeschwindigkeit, welche er als angebracht ansieht, analysiert seine Auswahl in Anbetracht des nach zwei Betriebszyklen erreichten Ergebnisses, wählt wenn notwendig eine neue Einstellung, wartet das Ende des Zyklus in der bereits ausgewählten Betriebsart ab, bis seine neue Einstellung von der Anlage angenommen wird. Dieses Einstellverfahren ist arbeitsaufwendig und erfordert vom Fahrzeuglenker eine nicht immer anzutreffende oder vielleicht nicht erwerbbare Erfahrung, um die für die Regenintensität erforderliche Betriebsgeschwindigkeit augenblicklich einzustellen.

Die vorliegende Erfindung behandelt ein Verfahren und ein System zum Steuern des Betriebs einer Scheibenwischanlage von Kraftfahrzeugen, ausgehend von Befehlen, welche der Fahrzeugführer mittels elektrischer Schalter, vorzugsweise Tasten, abgibt.

### Vorteile der Erfindung

Der Zweck der Erfindung ist ein Verfahren und ein System zum Betreiben einer Scheibenwischanlage für Kraftfahrzeuge mittels eines einfach aufgebauten Bedienelements, einer verringerten Verkabelung und eine Programmierung, die es dem Fahrzeuglenker erlaubt, verschiedene Betriebsgeschwindigkeiten im Sinne von Wischzyklen pro Zeiteinheit zu programmieren.

Ein weiterer Zweck der Erfindung ist ein Verfahren und ein System wie oben erwähnt, welches es dem Fahrzeugführer erlaubt, augenblicklich die durch die momentane Regenintensität erforderliche Betriebsgeschwindigkeit einzustellen.

Das erfindungsgemäße Verfahren weist die im Patentanspruch 1 angegebenen Schritte auf.

In der D1 (EP-A-0 283 005) wird ein Verfahren zum Betreiben einer Scheibenwischanlage gezeigt, welches nach Erzeugen eines Einschaltsignals einen elektrischen Wischermotor zum Einleiten eines entsprechenden Betriebszyklusses startet. Wenn der Wischer die Endstellung des Betriebszyklusses erreicht hat, wird ein Stellungssignal erzeugt und der Motor ausgeschaltet. Wird ein neues Einschaltsignal innerhalb eines Zeitabschnitts von einer vorgegebenen maximalen Dauer erzeugt, so wird der entsprechende Zeitabschnitt als Maß für die neue Pausezeit in einem Speicher registriert und der Wischermotor in den Intervallen der registrierten Pausezeit wiederholt automatisch eingeschalten. Wird ein Ausschaltsignal erzeugt, so wird der Wischermotor ausgeschaltet, sobald der Wischer die Endstellung erreicht hat.

Die erfindungsgemäße Vorrichtung zum Betreiben einer Scheibenwischanlage, welches jene Betriebsschritte realisiert, die im obengenannten Verfahren definiert wurden, ist im Anspruch 9 angegeben.

Diese hier vorgeschlagene Lösung ermöglicht den Betrieb einer Scheibenwischanlage mittels einer einfach aufgebauten Vorrichtung und erlaubt dem Fahrzeuglenker augenblicklich durch sein Befehl die durch die Regenbedingungen erforderliche Betriebsgeschwindigkeit einzustellen.

### Zeichnung

Ausführungsbeispiele der Erfindung sind in den Zeichnungen dargestellt und in der nachfolgenden Beschreibung näher erläutert. Es zeigen:
Figur 1 ein Blockdiagramm einer ersten Ausführung und
Figur 2 ein Blockdiagramm einer zweiten Ausführung des Aufbaus und Betriebs der vorliegenden Erfindung.

### Beschreibung der Ausführungsbeispiele

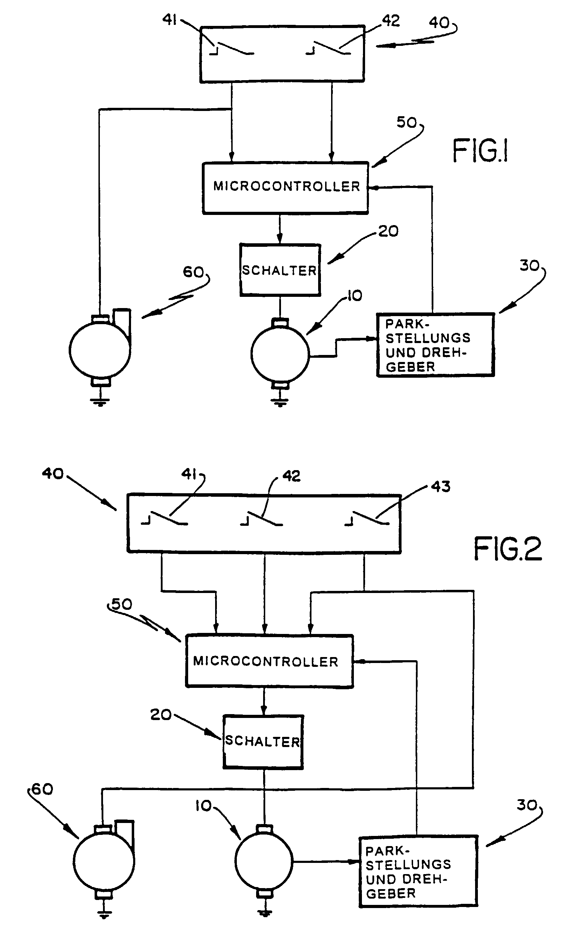

Gemäß Figur 1 wird der Scheibenwischer durch seinen elektromotorischen Antrieb 10 dargestellt, der ausgehend von einem Schalter 20, welcher an das durch Gleichstrom gespeiste Bordnetz des Fahrzeuges angeschlossen ist, einschaltbar ist.

An die Achse des Elektromotors 10 ist ein Drehaufnehmer 30 mittels jeglicher bekannter Lösung des Stands der Technik operativ angekoppelt, dessen Funktion es ist, Signale, welche die Drehung des Elektromotors 10 bestimmen, zu erzeugen, immer wenn der Scheibenwischer seine Endposition des Betriebszyklusses erreicht.

Es kann zum Beispiel ein Hallsensor, eine Kombination aus einer Scheibe mit Lichtschranke oder eine Kombination aus einer Scheibe mit elektrischen Kontakten, welche sich in der Wischermotoreneinheit befindet, benutzt werden.

Damit der Fahrzeugführer den Betrieb des Scheibenwischers kontrollieren kann, ist ein Bedienelement 40 vorgesehen, das bei der Ausführung wie in Figur 1 dargestellt aus einem Bedienhebel (nicht dargestellt) besteht, welcher elastisch und dauerhaft in einer inaktiven Ruhestellung gehalten wird, und durch den Fahrzeugführer wahlweise in entsprechende Stellungen zur Erzeugung von Einschalt- und Ausschaltsignalen für den Elektromotor 10 auslenkbar ist.

In den Ein- und Ausschaltbetriebsstellungen betätigt der Bedienhebel entsprechend eine Taste "on" 41 und eine Taste "off" 42, welche dementsprechend Ein- und Ausschaltsignale für den Elektromotor 10 erzeugen, wenn sie betätigt werden.

Das System besteht weiterhin aus einer elektronischen Prozeßeinheit 50, die operativ an das Bedienelement 40, den Schalter 20 und den Drehaufnehmer 30 angeschlossen ist, zum Verarbeiten der durch das Bedienelement erzeugten Einschalt- und Ausschaltsignale sowie des durch den Drehaufnehmer 30 erzeugten Endstellungssignals des Betriebszyklusses, die den Betrieb des Scheibenwischers steuert und folgende Funktionen ausführt:
- Wischen in nur einem Betriebszyklus: In diesem Fall wird der Elektromotor 10 eingeschaltet, wenn der Fahrzeuglenker die Taste "on" 41 des Bedienelements 40 betätigt und ausgeschaltet, wenn der Drehaufnehmer 30 an die Prozeßeinheit 50 ein anschließendes Signal über das Ende des Betriebszyklusses sendet, das die Parkstellung des Scheibenwischers darstellt.
- Dauerwischen: In diesem Fall wird der Elektromotor 10 eingeschaltet, wenn der Fahrzeuglenker die Taste "on" 41 das Bedienelement 40 betätigt, um einen ersten Betriebszyklus des Scheibenwischers einzuleiten und eine weitere Betätigung der Taste "on" 41 durch den Fahrzeuglenker erfolgt, bevor der Drehsensor 30 das Signal über das Ende des diesbezüglichen ersten Betriebszyklusses an die Prozeßeinheit 50 sendet.
   Die Prozeßeinheit 50 erfaßt die Dauer dieses Zeitabschnittes zwischen den beiden aufeinanderfolgenden Einschaltsignalen, welche kleiner ist als die Ausführungsdauer eines Betriebszyklusses, und läßt den Elektromotor 10 für die nachfolgenden Betriebszyklen kontinuierlich eingeschaltet, bis der Fahrzeugführer die Taste "off" 42 das Bedienelement 40 betätigt, damit mit dem nachfolgendem Signal über das Ende des Betriebszyklusses die Ausschaltung des Elektromotors 10 erlaubt wird.
- Intervallwischen: In diesem Fall wird der Elektromotor 10 eingeschaltet, wenn der Fahrzeuglenker die Taste "on" 41 des Bedienelements 40 betätigt, um einen ersten Betriebszyklus des Scheibenwischers einzuleiten, wobei der Zyklus ausgeführt und bis beim Erreichen der Endstellung der Motor durch die Erzeugung des Signals über das Ende des Betriebszyklusses durch den Drehsensor 30 normal ausgeschaltet wird. Nachdem dieser erste Betriebszyklus beendet ist, betätigt der Fahrzeugführer erneut die Taste "on" 41 zu dem Zeitpunkt wenn er dies entsprechend des Niederschlags auf der Windschutzscheibe für notwendig erachtet und somit einen neuen Betriebszyklus des Scheibenwischers einleitet.

Die elektronische Prozeßeinheit 50 erfaßt die Dauer des Zeitabschnittes zwischen den beiden aufeinanderfolgenden Einschaltsignalen, welche größer sein wird als die Dauer des direkt vorausgegangenen Betriebszyklusses, und verarbeitet diese Dauer des genannten Zeitabschnittes zum automatischen Einschalten des Elektromotors 10 für die Ausführung von aufeinanderfolgenden Betriebszyklen mit derselben Dauer des Zeitabschnittes, ausgehend von der Erzeugung des direkt vorausgegangen Einschaltsignals, bis der Fahrzeuglenker die Taste "off" 42 das Bedienelement 40 betätigt, damit mit dem nachfolgendem Signal über das Ende des Betriebszyklusses die Ausschaltung des Elektromotors 10 erlaubt wird.

Das automatische Einschalten des Elektromotors 10 im unterbrechenden Betrieb (Intervallwischen) wird nur ausgeführt, wenn die Dauer des Zeitabschnittes zwischen zwei aufeinanderfolgenden Einschaltsignalen kleiner ist als eine bestimmte maximale Dauer. Oder anders: Wenn keine Anweisung zum Einschalten des Elektromotors 10 innerhalb einer gewissen Zeit nach dem Erzeugen des letzten Einschaltsignals des Motors erfolgt, löst ein neues Einschalten lediglich einen einzelnen Betriebszyklus des Scheibenwischers aus.

Die obengenannte Anordnung erlaubt auch, daß der Fahrzeugführer vom kontinuierlichen Betrieb zum unterbrochenen Betrieb zurückkehrt, indem er zunächst die Taste "off" 42 zum Ausschalten des Elektromotors 10 betätigt, um die kontinuierliche Betriebsart zu unterbrechen und dann erneut die Taste "on" 41, während eines bestimmten maximalen Zeitabschnittes gezählt, ausgehend von dem letzten Einschalten des Elektromotors 10 oder auch von der Einleitung des letzten Betriebszyklusses vor der Betätigung der Taste "off" 42, betätigt.

In den in der Zeichnung dargestellten Ausführungsbeispielen ist eine elektrisch betriebene Wasserpumpe 60 vorgesehen, um einen auf die Windschutzscheibe gerichteten Wasserstrahl zu erzeugen.

Bei dem in Figur 1 dargestellten Ausführungsbeispiel wird die Pumpe 60 eingeschaltet, wenn die Taste "on" 41 des Bedienelements 40 für eine bestimmte Zeit betätigt gehalten wird. In diesem Zustand bleibt die Pumpe 60 eingeschaltet solange die Taste "on" 41 betätigt wird. Damit der Scheibenwischer nicht, während die Taste "on" 41 in der Einschaltstellung gehalten wird, zu arbeiten anfängt bevor der Wasserstrahl auf die Windschutzscheibe trifft, erzeugt die elektronische Prozeßeinheit 50 eine Verzögerung beim Einschalten des elektrischen Wischermotors 10.

Wenn die Taste "on" 41 losgelassen wird, bleibt der Elektromotor 10 einige Betriebszyklen eingeschaltet, bevor er ausgeschaltet wird.
In dem Fall, wenn diese Funktion "Waschen" während einer anderen Funktion betätigt wird, wird die ausgeführte Funktion unterbrochen und die Funktion "Waschen", in Übereinstimmung mit dem oben beschriebenen Verfahren, ausgeführt. Ist die Funktion "Waschen" durch Loslassen der Taste "on" 41 beendet, kehrt das System zurück und arbeitet in Übereinstimmung mit der vorherigen Funktion die unterbrochen wurde.

Das in Figur 2 dargestellte Ausführungsbeispiel zeigt die gleichen Grundelemente, wie das in Figur 1 dargestellte Ausführungsbeispiel mit lediglich einer Änderung beim Betrieb der Wasserpumpe 60. In diesem Fall beinhaltet das Bedienelement 40 außer den Tasten "on" 41 und "off" 42 eine zusätzliche Taste 43, dessen Betätigung durch den Bedienhebel das Einschalten der Wasserpumpe 60, in der Art und Weise wie schon in Bezug auf die Ausführung nach Figur 1 beschrieben, bewirkt.

Diese konstruktive Variante erlaubt es einen Betriebszyklus mit dem Drücken der Taste "on" 41 einzuleiten, während bei der Ausführung nach Figur 1 das Einschalten des Elektromotors 10 erst mit dem Loslassen der Taste "on" 41, nachdem sie gedrückt wurde, erfolgt.

Die elektronische Prozeßeinheit 50 sieht weiterhin einen Schutz gegen das Blockieren des Scheibenwischers vor, der das Ausschalten des Elektromotors 10 bewirkt, wenn dieser eingeschaltet ist und seine Drehung mittels des Drehsensors 30 nicht festgestellt werden kann.

Wie man aus den oben beschriebenen Betriebsarten ersehen kann, ist die elektronische Prozeßeinheit 50 ausgelegt zur automatischen Einschaltung des Elektromotors 10 und zum Ausführen eines entsprechenden Betriebszyklusses in einem Zeitabschnitt nicht größer als die maximal vorgegebene Dauer, gezählt ausgehend von der Erzeugung des unmittelbar vorhergehenden Einschaltsignals und gleich der Dauer des Zeitabschnitts zwischen der Erzeugung der beiden unmittelbar vorausgegangenen Einschaltsignalen.

Auf Grund dieser Verfahrenseigenschaft wird jedes automatische oder willkürlich erzeugte Einschaltsignal des Elektromotors 10 zur Bestimmung der Dauer des Zeitabschnittes im Bezug auf das vorherige automatisch oder willkürlich erzeugte Einschaltsignal verarbeitet.

Wenn die Dauer des Zeitabschnittes nicht größer als die vorgegebene maximale Dauer ist, verarbeitet das System diese Dauer, um nachfolgend ein Einschalten des Motors im gleichen Zeitabschnitt zu erzeugen und dies zu wiederholen, bis ein willkürlich erzeugtes Ausschaltsignal erfolgt.

Wenn die Dauer des Zeitabschnitts zwischen den beiden letzten Einschaltsignalen größer ist als die vorgegebene maximale Dauer, erfolgt nachfolgend kein automatisches Einschalten und das letzte Einschaltsignal wird als neues Bezugssignal für die Messung des Zeitabschnittes in Bezug auf ein nachfolgendes Einschaltsignal erfaßt.

Als Auswirkung dieser Betriebsart wird das automatische Einschaltsignal des Elektromotors 10 bei Ausführung des letzten oder jeden Betriebszyklusses des Scheibenwischers nach dem Ausschalten der Wasserpumpe 60 als Bezugssignal zur Messung des Zeitabschnittes in Bezug auf ein nachfolgendes Einschaltsignal von der Prozeßeinheit 50 benutzt.

Wenn dann nach dem Ausschalten der Wasserpumpe 60 der Fahrzeugführer ein willkürliches Einschaltsignal in einem Zeitabschnitt gleich oder kleiner der vorgesehenen maximalen Dauer nach dem letzten automatischen Einschaltsignals des Motors erzeugt, wird die Prozeßeinheit 50 dies als Zeitabschnitt betrachten und nachfolgend Einschaltungen des Motors in der unterbrechenden oder kontinuierlichen Betriebsart, abhängig davon ob die tatsächliche Dauer des erfaßten Zeitabschnittes größer oder kleiner ist als die Dauer eines entsprechenden Betriebszyklusses des Scheibenwischers, erzeugen.

Diese Betriebsvorrichtung erlaubt dem Fahrzeugführer nach dem Ausschalten der Wasserpumpe 60 das Anwählen einer neuen kontinuierlichen oder unterbrechenden Betriebsart des Scheibenwischers durch eine einzelne Betätigung des Bedienelements 40.

## Patentansprüche

1. Verfahren zum Betreiben einer Scheibenwischanlage, mit mindestens folgenden Etappen:
- Erzeugen eines Einschaltsignals und Verarbeiten desselben zum Einschalten eines elektrischen Wischermotors (10) und Einleiten eines entsprechenden Betriebszyklusses des letzteren;
- Erzeugen eines Stellungssignals, wenn der Wischer die Endstellung des Betriebszyklusses erreicht und Verarbeiten dieses Stellungssignals zum Anweisen der Ausschaltung des Elektromotors (10), wenn der Scheibenwischer die Endstellung des Betriebszyklusses erreicht;
- Erzeugen eines neuen Einschaltsignals innerhalb eines Zeitabschnitts von einer vorgegebenen maximalen Dauer, gezählt von der Erzeugung des vorherigen Einschaltsignals, und Verarbeiten dieses Signals zum Einschalten des Elektromotors (10) und Einleiten eines neuen Betriebszyklusses des Scheibenwischers in einem Zeitabschnitt, der von der Erzeugung des genannten vorherigen Einschaltsignals gezählt variiert zwischen einer Dauer, die gleich der Dauer der Ausführung des genannten Betriebszyklusses ist, wenn der Zeitabschnitt zwischen den beiden aufeinanderfolgenden Einschaltsignalen gleich oder kleiner ist als die Dauer des genannten Betriebszyklusses wodurch der Elektromotor für die nachfolgenden Betriebszyklen kontinuierlich eingschaltet wird, bis zu einer Dauer gleich jener des entsprechenden Zeitabschnittes zwischen den beiden aufeinanderfolgenden Einschaltsignalen, wenn diese größer ist als die Dauer des erwähnten Betriebszyklusses; (unterbrechender Betrieb)
- Registrieren der Dauer des Zeitabschnittes zwischen zwei aufeinanderfolgenden Einschaltsignalen und Verarbeiten der Einschaltsignale zum wiederholten automatischen Einschalten des Elektromotors (10), für die Ausführung von aufeinanderfolgenden Betriebszyklen mit derselben Dauer innerhalb des registrierten Zeitabschnittes und
- Erzeugen eines Ausschaltsignals für den Elektromotor (10) und Verarbeiten desselben zum Ausschalten des Scheibenwischers, wenn dieser die Endstellung des Betriebszyklusses durch automatischen Betrieb des Elektromotors (10) erreicht.

2. Verfahren nach Anspruch 1, dadurch gekennzeichnet, daß es weiterhin folgende Etappen beinhaltet:
- Erzeugen eines Wiedereinschaltsignals des Elektromotors (10) nach seiner vorherigen Ausschaltung in einem Zeitabschnitt kleiner der vorgegebenen maximalen Dauer und gezählt ausgehend von der Erzeugung des letzten vorausgegangenen Einschaltsignals vor der Ausschaltung;
- Verarbeiten dieses Wiedereinschaltsignals des Elektromotors (10) und Einleiten eines neuen Betriebszyklusses des Scheibenwischers;
- Erfassen des Zeitabschnittes zwischen der Erzeugung des letzten Einschaltsignals und der Erzeugung des Wiedereinschaltsignals und Verarbeiten dieser Dauer zum Durchführen der automatischen Einschaltung des Elektromotors (10) zur aufeinanderfolgenden Ausführung der Betriebszyklen des Scheibenwischers, ausgehend von der gleichen Dauer des zwischen den beiden letzten Einschaltsignalen erfaßten Zeitabschnittes.

3. Verfahren nach Anspruch 2, dadurch gekennzeichnet, daß das Einschaltsignal, das neue Einschaltsignal und das Ausschaltsignal mittels willkürlicher Betätigung eines Bedienelements (40) durch den Fahrzeugführer erzeugt werden.

4. Verfahren nach Anspruch 1, gekennzeichnet durch Einschießen der Etappe des Erzeugens von Drehsignalen des Elektromotors (10) und Verarbeiten dieser, zusammen mit jedem Einschaltsignal, so daß ein Ausschalten des Elektromotors (10) erfolgt, wenn nach einer gewissen Einschaltdauer keine Erzeugung des Drehsignals erkannt wird.

5. Verfahren, in Übereinstimmung mit dem Anspruch 1, dadurch gekennzeichnet, daß es noch folgende Etappen beinhaltet:
- Einschalten einer Wasserpumpe (60) durch kontinuierliches Betätigen des Bedienelements (40) durch den Fahrzeugführer, zum Erzeugen eines Wasserstrahl, der auf die Windschutzscheibe trifft;
- Erzeugen eines Einschaltsignals des Elektromotors (10) während der Einschaltdauer der Wasserpumpe (60);
- Verarbeiten des genannten Einschaltsignals des Elektromotors (10), so daß für eine kontinuierliche Einschaltung des Elektromotors (10) nach dem Ablauf einer bestimmten Einschaltdauer der Wasserpumpe (60) gesorgt wird;
- Ausschalten der Wasserpumpe (60) durch Beendigung der Betätigung des Bedienelements (40) durch den Fahrzeugführer;
- Erzeugen eines Betriebsendesignals der Wasserpumpe (60) beim Ausschalten der Wasserpumpe (60);
- Verarbeiten des genannten Betriebsendesignals der Wasserpumpe (60) und der Betriebszyklusendstellungssignale des Scheibenwischers, so daß der Motor (10) zu der dem Wasserpumpenbetrieb vorausgegangenen Betriebsart, nach der Ausführung einer gewissen Anzahl von Betriebszyklen des Scheibenwischers, nachfolgend jenem, der bei der Ausschaltung der Wasserpumpe (60) ausgeführt wurde, zurückkehrt.

6. Verfahren nach Anspruch 1, dadurch gekennzeichnet, daß es noch folgende Etappen beinhaltet:
- Erfassen des Zeitabschnitts zwischen dem Einschalten und dem Ausschalten der Wasserpumpe (60); und
- Verarbeiten des genannten Zeitabschnittes zusammen mit dem Ausschaltsignal der Pumpe, so daß für das Einschalten des Elektromotors (10) zur Ausführung eines Betriebszyklusses gesorgt wird, wenn der genannte Zeitabschnitt kleiner ist als die gewisse notwendige Dauer, die der Wasserstrahl nach dem Einschalten der Wasserpumpe (60) benötigt, damit er die Windschutzscheibe erreicht.

7. Verfahren nach Anspruch 6, dadurch gekennzeichnet, daß das Ausschalten der Wasserpumpe (60) und die Erzeugung des Einschaltsignals für den Elektromotor (10) bei der Ausführung eines Betriebszyklusses durch eine einzelne Etappe der Beendigung der Betätigung des Bedienelements (40) durch den Fahrzeugführer erreicht wird.

8. Verfahren nach Anspruch 5, dadurch gekennzeichnet, daß die Einschaltung und die Ausschaltung der Wasserpumpe (60) durch entsprechende spezifische Betätigung und Beendigung der Betätigung des Bedienelements durch den Fahrzeugführer erreicht wird, während die Erzeugung des Einschaltsignals des Elektromotors (10) zur Ausführung eines Betriebszyklusses durch entsprechende spezifische Betätigung des Bedienelements (40) erreicht wird.

9. Vorrichtung zum Betreiben einer Scheibenwischanlage, dadurch gekennzeichnet, daß sie besteht aus:
- einem elastisch und dauerhaft in einer inaktiven Ruhestellung (25) gehaltenem Bedienelement (40), welches wahlweise in entsprechende Stellungen zur Erzeugung von Einschalt- und Ausschaltsignalen für den elektrischen Wischermotor (10) auslenkbar ist;
- einem Schalter (20) zum Einschalten des Elektromotors (10);
- einem Drehaufnehmer (30), welcher operativ an die Achse des Elektromotors (10) angekoppelt ist, um immer, wenn der Scheibenwischer die Endstellung des Betriebszyklusses erreicht, ein Positionssignal zu erzeugen; und
- einer elektronischen Prozeßeinheit (50), die operativ an das Bedienelement (40), den Schalter (20) und den Drehaufnehmer (30) angeschlossen ist, so daß die Verarbeitung der Einschalt- und Ausschaltsignale des Elektromotors (10) und der Endstellungssignale des Betriebszyklusses für:
- die Einschaltung des Elektromotors (10) bei der Erzeugung eines Einschaltsignals sorgt;
- eine Anweisung zum Ausschalten des Elektromotors (10) am Ende eines jeden Betriebszyklusses des Elektromotors (10) sorgt;
- die Einschaltung des Elektromotors (10) am Ende eines Betriebszyklusses, wenn ein neues Einschaltsignal im Zeitabschnitt, gezählt von der erwähnten Erzeugung des vorherigen Einschaltsignals kleiner einer vorgegebenen maximalen Dauer, erzeugt wird, sorgt;
- das automatische Einschalten des Elektromotors (10) bei der Ausführung eines nachfolgenden Betriebszyklusses mit der gleichen Dauer des zwischen den beiden vorausgegangenen aufeinanderfolgenden Betriebszyklen erfaßten Zeitabschnitts, sorgt; und
- die Ausschaltung des Elektromotors (10), bei Betätigung des Bedienelements (40) zum Ausschalten des Scheibenwischers, wenn dieser die Endstellung des Betriebszyklusses durch automatischen Betrieb des Elektromotors (10) erreicht, sorgt, sowie
- die kontinuierliche Einschaltung des Elektromotors (10) für die nachfolgenden Betriebszyklen sorgt, wenn der Zeitabschnitt zwischen zwei aufeinanderfolgenden Einschaltsignalen gleich oder kleiner ist als die Dauer eines Betriebszyklusses.

10. Vorrichtung nach Anspruch 9, dadurch gekennzeichnet, daß die elektronische Prozeßeinheit (50) ein willkürlich, in einem Zeitabschnitt kleiner als eine vorgegebene maximale Dauer gezählt, ausgehend von der Erzeugung des letzten vorausgegangenen Einschaltsignals bis zu einer Ausschaltung des Elektromotors (10), erzeugtes Wiedereinschaltsignal des Elektromotors (10), so verarbeitet daß ein automatisches Einschalten des Elektromotors (10) für nachfolgende Betriebszyklen des Scheibenwischers mit der gleichen Dauer des Zeitabschnittes zwischen der aufeinanderfolgenden Erzeugung der Einschaltsignale erfolgt.

11. Vorrichtung nach Anspruch 9, dadurch gekennzeichnet, daß sie weiterhin eine Wasserpumpe (60) enthält, die operativ so an das Bedienelement (40) angeschlossen ist, daß sie bei einer entsprechend andauernden Betätigung des Bedienelements (40) durch den Fahrzeuglenker eingeschaltet wird,
daß die genannte Prozeßeinheit (50) ein Einschaltsignal für den Elektromotor während der Einschaltung der Wasserpumpe (60), erzeugt;
und das Einschaltsignal des Elektromotors (10) so verarbeitet, daß die vorausgehende, bis zur Einschaltung der Wasserpumpe (60), ausgeführte Betriebsart unterbrochen wird und den Elektromotor, nach Ablaufen einer gewissen Einschaltzeit der Wasserpumpe (60), kontinuierlich einschaltet; und
das Endsignal des Wasserpumpenbetriebs und das Endstellungssignal eines Betriebszyklusses so verarbeitet, daß der Elektromotor (10) zu der genannten vorausgegangenen Betriebsart zurückkehrt, nachdem eine gewisse Anzahl von Betriebszyklen des Scheibenwischers, nachfolgend jenem welcher bei der Ausschaltung der Wasserpumpe (60) ausgeführt wurde, beendet wurden.

12. Vorrichtung nach einen der Ansprüche 10 oder 11, dadurch gekennzeichnet, daß die Stellungen des Bedienelements (40) zur Erzeugung der Einschalt- und Ausschaltsignale des Elektromotors (10) bestimmt sind durch eine Betätigungsstellung der entsprechenden Taste "on" (41) und "off" (42), aber dauerhaft und elastisch in der inaktiven Ruhestellung des Bedienelements (40) gehalten wird.

13. Vorrichtung nach Anspruch 12, dadurch gekennzeichnet, daß das Bedienelement (40) eine Taste (41, 43) enthält, die die Einschaltung der Wasserpumpe (60) bewirkt, wenn sie aus einer Ruhestellung zu einer Betätigungsstellung ausgelenkt wird, und die genannte Einschaltung aufrechterhält, während sie in dieser Betätigungsstellung gehalten wird; und die Ausschaltung der Wasserpumpe (60) bewirkt, wenn sie durch den Fahrzeuglenker losgelassen wird, um in die Ruhestellung zurückzukehren, wo sie kontinuierlich und elastisch gehalten wird.

14. Vorrichtung nach Anspruch 13, dadurch gekennzeichnet, daß die Einschalttaste der Wasserpumpe (60) die Taste "on" (41) für das Einschaltsignal des Elektromotors (10) ist, und daß das erwähnte Einschaltsignal dann erzeugt wird, wenn die Taste "on" (41) in seine Ruhestellung zurückgekehrt ist.

15. Vorrichtung nach Anspruch 13, dadurch gekennzeichnet, daß die Einschalttaste der Wasserpumpe (60) eine einzelne Taste (43) ist.

## Claims

1. Method for operating a windscreen wiping installation, having at least the following stages:
- generation of a switch-on signal and processing thereof for the switching-on of an electric wiper motor (10) and initiation of a corresponding operating cycle of the latter;
- generation of a position signal when the wiper reaches the end position of the operating cycle and processing of this position signal for instructing the switching-off of the electric motor (10) when the windscreen wiper reaches the end position of the operating cycle;
- generation of a new switch-on signal within a time segment of a predetermined maximum duration, counted from the generation of the previous switch-on signal, and processing of this signal for the switching-on of the electric motor (10) and initiation of a new operating cycle of the windscreen wiper in a time segment which, counted from the generation of the said previous switch-on signal, varies between a duration which is equal to the duration of the performance of the said operating cycle, if the time segment between the two successive switch-on signals is less than or equal to the duration of the said operating cycle, as a result of which the electric motor is switched on continuously for the subsequent operating cycles, up to a duration equal to that of the corresponding time segment between the two successive switch-on signals, if this is greater than the duration of the aforementioned operating cycle; (intermittent operation)
- recording of the duration of the time segment between two successive switch-on signals and processing of the switch-on signals for the repeated automatic switching-on of the electric motor (10), for the performance of successive operating cycles with the same duration within the recorded time segment, and
- generation of a switch-off signal for the electric motor (10) and processing thereof for the switching-off of the windscreen wiper when the latter reaches the end position of the operating cycle by automatic operation of the electric motor (10).

2. Method according to Claim 1, characterized in that it furthermore comprises the following stages:
- generation of a reswitch-on signal of the electric motor (10) after its previous switching-off in a time segment shorter than the predetermined maximum duration and counted proceeding from the generation of the last preceding switch-on signal prior to the switching-off;
- processing of this reswitch-on signal of the electric motor (10) and initiation of a new operating cycle of the windscreen wiper;
- detection of the time segments between the generation of the last switch-on signal and the generation of the reswitch-on signal and processing of this duration for the implementation of the automatic switching-on of the electric motor (10) for the successive performance of the operating cycles of the windscreen wiper, proceeding from the same duration of the time segment detected between the last two switch-on signals.

3. Method according to Claim 2, characterized in that the switch-on signal, the new switch-on signal and the switch-off signal are generated by means of voluntary actuation of an operating element (40) by the driver of the vehicle.

4. Method according to Claim 1, characterized by insertion of the stage of generation of rotation signals of the electric motor (10) and processing thereof, together with each switch-on signal, with the result that the electric motor (10) is switched off if generation of the rotation signal is not identified after a certain switched-on duration.

5. Method, in accordance with Claim 1, characterized in that it additionally comprises the following stages:
- switching-on of a water pump (60) by continuous actuation of the operating element (40) by the driver of the vehicle, for the generation of a jet of water which strikes the windscreen;
- generation of a switch-on signal of the electric motor (10) during the switched-on duration of the water pump (60);
- processing of the said switch-on signal of the electric motor (10) thereby providing for continuous switch-on of the electric motor (10) after a specific switched-on duration of the water pump (60) has elapsed;
- switching-off of the water pump (60) by the ending of the actuation of the operating element (40) by the driver of the vehicle;
- generation of an end-of-operation signal of the water pump (60) when the water pump (60) is switched off;
- processing of the said end-of-operation signal of the water pump (60) and of the operating cycle end position signals of the windscreen wiper, with the result that the motor (10) returns to the operating mode preceding the water-pump operation, after the performance of a certain number of operating cycles of the windscreen wiper, following that which was performed when the water pump (60) was switched off.

6. Method according to Claim 1, characterized in that it additionally comprises the following stages:
- detection of the time segments between the switching-on and the switching-off of the water pump (60); and
- processing of the said time segment together with the switching-off signal of the pump, thereby providing for the switching-on of the electric motor (10) for the performance of an operating cycle if the said time segment is shorter than the necessary duration required by the jet of water after the switching-on of the water pump (60), in order to reach the windscreen.

7. Method according to Claim 6, characterized in that the switching-off of the water pump (60) and the generation of the switch-on signal for the electric motor (10), in the case of the performance of an operating cycle, are achieved by an individual stage of the ending of the actuation of the operating element (40) by the driver of the vehicle.

8. Method according to claim 5, characterized in that the switching-on and the switching-off of the water pump (60) are achieved by corresponding specific actuation and ending of the actuation of the operating element by the driver of the vehicle, while the generation of the switch-on signal of the electric motor (10) for the performance of an operating cycle is achieved by corresponding specific actuation of the operating element (40).

9. Apparatus for operating a windscreen wiping installation, characterized in that it comprises:
- an operating element (40), which is held elastically and permanently in an inactive rest position (25) and can optionally be deflected into corresponding positions for the generation of switch-on and switch-off signals for the electric wiper motor (10);
- a switch (20) for switching-on the electric motor (10);
- a rotary pick-up (30), which is operatively coupled to the spindle of the electric motor (10) in order to generate a position signal whenever the windscreen wiper reaches the end position of the operating cycle; and
- an electronic processing unit (50), which is operatively connected to the operating element (40), the switch (20) and the rotary pick-up (30), with the result that the processing of the switch-on and switch-off signals of the electric motor (10) and the end position signals of the operating cycle provides for:
- the switching-on of the electric motor (10) in the case of the generation of a switching-on signal;
- an instruction for the switching-off of the electric motor (10) at the end of each operating cycle of the electric motor (10);
- the switching-on of the electric motor (10) at the end of an operating cycle if a new switch-on signal is generated in the time segment, counted from the aforementioned generation of the previous switch-on signal, less than a predetermined maximum duration;
- the automatic switching-on the electric motor (10) in the case of the performance of a subsequent operating cycle with the same duration of the time segment detected between the two preceding, successive operating cycles; and
- the switching-off of the electric motor (10), in the case of the actuation of the operating element (40) for switching off the windscreen wiper, when the latter reaches the end position of the operating cycle by automatic operation of the electric motor (10), and
- the continuous switching-on of the electric motor (10) for the subsequent operating cycles if the time segment between two successive switch-on signals is less than or equal to the duration of an operating cycle.

10. Apparatus according to Claim 9, characterized in that the electronic processing unit (50) processes a reswitch-on signal of the electric motor (10), which signal is generated arbitrarily, counted in a time segment shorter than a predetermined maximum duration, proceeding from the generation of the last preceding switch-on signal up to a switching-off of the electric motor (10), in such a way that the electric motor (10) is automatically switched off for subsequent operating cycles of the windscreen wiper with the same duration of the time segment between the successive generation of the switch-on signals.

11. Apparatus according to Claim 9, characterized in that it furthermore contains a water pump (60), which is operatively connected to the operating element (40) in such a way that it is switched on in the event of a correspondingly lengthy actuation of the operating element (40) by the driver of the vehicle,
that the said processing unit (50) generates a switch-on signal for the electric motor during the switching-on of the water pump (60);
and processes the switch-on signal of the electric motor (10) in such a way that the preceding operating mode performed until the switching-on of the water pump (60) is interrupted,
and continuously switches off the electric motor after a certain switching-on time of the water pump (60) has elapsed; and
processes the end signal of the water pump operation and the end position signal of an operating cycle in such a way that the electric motor (10) returns to the said preceding operating mode after a certain number of operating cycles of the windscreen wiper have been ended, following that which was performed when the water pump (60) was switched off.

12. Apparatus according to either of Claims 10 and 11, characterized in that the positions of the operating element (40) for generating the switch-on and switch-off signals of the electric motor (10) are determined by an actuation position of the corresponding pushbutton "on" (41) and "off" (42), but is held permanently and elastically in the inactive rest position of the operating element (40).

13. Apparatus according to Claim 12, characterized in that the operating element (40) contains a pushbutton (41, 43), which effects the switching-on of the water pump (60) when it is deflected from a rest position to an actuation position, and maintains the said switching-on while it is held in this actuation position; and effects the switching-off of the water pump (60) when it is released by the driver of the vehicle, in order to return to the rest position, where it is held continuously and elastically.

14. Apparatus according to Claim 13, characterized in that the switch-on pushbutton of the water pump (60) is the pushbutton "on" (41) for the switch-on signal of the electric motor (10), and in that the aforementioned switch-on signal is generated when the pushbutton "on" (41) is returned to its rest position.

15. Apparatus according to Claim 13, characterized in that the switch-on pushbutton of the water pump (60) is an individual pushbutton (43).

## Revendications

1. Procédé pour faire fonctionner une installation d'essuie-glace,
caractérisé par au moins les étapes suivantes :
• Production d'un signal de mise en marche et retraitement de celui-ci pour mettre en marche un moteur électrique (10) d'essuie-glace et pour initier un cycle correspondant de fonctionnement de ce dernier;
• production d'un signal de position, quand l'essuie-glace a atteint la position finale du cycle de fonctionnement et retraitement de ce signal de position pour indiquer le débranchement du moteur électrique (10), quand l'essuie-glace atteint la position finale du cycle de fonctionnement;
• production d'un nouveau signal de mise en marche à l'intérieur d'un laps de temps d'une durée maximale prédéfinie, compté à partir de la production du signal de mise en marche précédent, et retraitement de ce signal pour mettre en marche le moteur électrique (10) et initier un nouveau cycle de fonctionnement de l'essuie-glace dans un laps de temps, qui, compté à partir de la production du signal de mise en marche précédent mentionné, varie entre une durée, qui est égale à la durée de réalisation du cycle de fonctionnement mentionné, quand le laps de temps entre les deux signaux de mise en marche consécutifs est égale ou inférieure à la durée du cycle de fonctionnement mentionné, grâce à quoi le moteur électrique est mis en marche de façon continue pour les cycles de fonctionnement suivants, pour une durée égale à celle du laps de temps correspondant qui s'écoule entre les deux signaux consécutifs de mise en marche, quand celle-ci est plus grande que la durée du cycle de fonctionnement évoqué (fonctionnement intermittent) ;
• enregistrement de la durée du laps de temps compris entre deux signaux de mise en marche consécutifs et retraitement des signaux de mise en marche pour la mise en marche répétée automatique du moteur électrique (10), pour la réalisation de cycles de fonctionnement consécutifs avec la même durée à l'intérieur du laps de temps enregistré et,
• production d'un signal de débranchement du moteur électrique (10) et retraitement de ce signal pour débrancher l'essuie-glace quand celui-ci atteint la position finale du cycle de fonctionnement par le fonctionnement automatique du moteur électrique (10).

2. Procédé selon la revendication 1,
caractérisé en ce qu'il contient en outre les étapes suivantes :
• Production d'un signal de remise en marche du moteur électrique (10) après son débranchement précédent dans un laps de temps inférieur à la durée maximale prédéfinie et compté en partant de la production du dernier signal précédent de mise en marche avant le débranchement;
• retraitement de ce signal de remise en marche du moteur électrique (10) et introduction d'un nouveau cycle de fonctionnement de l'essuie-glace;
• détection du laps de temps qui s'écoule entre la production du dernier signal de mise en marche et la production du signal de remise en marche et retraitement de cette durée pour réaliser la mise en marche automatique du moteur électrique (10) pour l'exécution consécutive des cycles de fonctionnement de l'essuie-glace, en partant de la même durée du laps de temps détecté entre les deux derniers signaux de mise en marche.

3. Procédé selon la revendication 2,
caractérisé en ce que
le signal de mise en marche, le nouveau signal de mise en marche et le signal de débranchement sont produits au moyen d'un actionnement volontaire d'un élément de manoeuvre (40) par le conducteur du véhicule.

4. Procédé selon la revendication 1,
caractérisé par
l'insertion de l'étape de la production de signaux de rotation du moteur électrique (10) et le retraitement de ceux-ci, en même temps que chaque signal de mise en marche, de telle sorte qu'ait lieu un débranchement du moteur électrique (10) quand on a constaté après une certaine durée de mise en marche que le signal de rotation ne se produisait pas.

5. Procédé en accord avec la revendication 1,
caractérisé en ce qu'il contient encore les étapes suivantes :
• Mise en marche d'une pompe à eau (60) par actionnement continu de l'élément de manoeuvre (40) par le conducteur du véhicule, pour produire un jet d'eau, qui atteint le pare-brise;
• production d'un signal de mise en marche du moteur électrique (10) pendant la durée de mise en marche de la pompe à eau (60);
• retraitement du signal de mise en marche mentionné du moteur électrique (10), de telle sorte qu'il soit veillé à une mise en marche continue du moteur électrique (10) après l'écoulement d'une durée de mise en marche déterminée de la pompe à eau;
• débranchement de la pompe à eau (60) en mettant fin à l'actionnement de l'élément de manoeuvre (40) par le conducteur du véhicule;
• production d'un signal de fin de fonctionnement de la pompe à eau (60) en débranchant la pompe à eau (60);
• Retraitement du signal mentionné de fin de fonctionnement de la pompe à eau (60) et des signaux de position de fin de cycle de fonctionnement de l'essuie-glace, de telle sorte que le moteur (10) revienne au mode de fonctionnement précédant le fonctionnement de la pompe à eau, après la réalisation d'un certain nombre de cycles de fonctionnement de l'essuie-glace, faisant suite à celui qui a été réalisé lors du débranchement de la pompe à eau (60).

6. Procédé selon la revendication 1,
caractérisé en ce qu'il contient encore les étapes suivantes :
• Détection du laps de temps qui s'écoule entre la mise en marche et le débranchement de la pompe à eau (60); et
• retraitement du laps de temps mentionné en même temps que le signal de débranchement de la pompe, de telle sorte qu'il soit veillé pour la mise en marche du moteur électrique (10) à la réalisation d'un cycle de fonctionnement, quand le laps de temps mentionné est plus petit que la durée nécessaire dont le jet d'eau a besoin après la mise en marche de la pompe à eau (60), pour atteindre le pare-brise.

7. Procédé selon la revendication 6,
caractérisé en ce que
le débranchement de la pompe à eau (60) et la production du signal de mise en marche pour le moteur électrique (10) lors de la réalisation d'un cycle de fonctionnement soient atteints par une seule étape de la terminaison de l'actionnement de l'élément de manoeuvre (40) par le conducteur du véhicule.

8. Procédé selon la revendication 5,
caractérisé en ce que
la mise en marche et le débranchement de la pompe à eau (60) sont obtenus par l'actionnement spécifique correspondant et la terminaison de l'actionnement de l'élément de manoeuvre par le conducteur du véhicule, pendant la production du signal de mise en marche du moteur électrique ( 10) pour réaliser un cycle de fonctionnement par l'actionnement spécifique correspondant de l'élément de manoeuvre (40).

9. Dispositif servant à faire fonctionner une installation d'essuie-glace,
caractérisé en ce qu'il consiste en :
• un élément de manoeuvre (40), maintenu élastiquement et en permanence dans une position de repos non opérationnelle, élément de manoeuvre (40) qui peut être actionné à volonté dans des positions adéquates pour produire des signaux de mise en marche et de débranchement du moteur électrique (10) de l'essuie-glace;
• un commutateur (20), qui sert à mettre en marche le moteur électrique (10);
• un capteur de rotation (30) qui est accouplé de façon opérationnelle à l'axe du moteur électrique (10), pour produire toujours un signal de position quand l'essuie-glace atteint la position finale du cycle de fonctionnement; et
• une unité électronique de processus (50) qui est raccordée de façon opérationnelle à l'élément de manoeuvre (40), au commutateur (20) et au capteur de rotation (30), de telle sorte que le retraitement des signaux de mise en marche et de débranchement du moteur électrique (10) et des signaux de position finale du cycle de fonctionnement veille à :
- la mise en marche du moteur électrique (10) lors d'un signal de démarrage ;
- l'information d'un arrêt du moteur électrique (10) à chaque fin de cycle du moteur électrique (10) ;
- la mise en marche du moteur électrique (10) à la fin d'un cycle de fonctionnement, quand un nouveau signal de mise en marche, dans le laps de temps, compté à partir de la production mentionnée du signal précédent de mise en marche, est produit en étant inférieur à une durée maximale prédéfinie;
- le branchement automatique du moteur électrique (10) lors de la réalisation d'un cycle de fonctionnement suivant avec la même durée du laps de temps détecté entre les deux cycles de fonctionnement consécutifs précédents; et
- le débranchement du moteur électrique (10), lors de l'actionnement de l'élément de manoeuvre (40) pour débrancher l'essuie-glace, quand celui-ci atteint la position finale du cycle de fonctionnement avec le fonctionnement automatique du moteur électrique (10), ainsi que
- la mise en marche continue du moteur électrique (10) pour les cycles de fonctionnement suivants, quand le laps de temps entre deux signaux de mise en marche consécutifs est égal ou inférieur à la durée d'un cycle de fonctionnement.

10. Dispositif selon la revendication 9,
caractérisé en ce que
l'unité électronique de processus (50) retraite un signal de remise en marche du moteur électrique (10), produit volontairement, dans un laps de temps inférieur à une durée maximale prédéfinie, en partant de la production du dernier signal de mise en marche précédent jusqu'au débranchement du moteur électrique (10) de telle sorte qu'ait lieu une mise en marche automatique du moteur électrique (10) pour des cycles suivants de l'essuie-glace avec la même durée du laps de temps qui s'écoule entre la production consécutive des signaux de mise en marche.

11. Dispositif selon la revendication 9,
caractérisée en ce qu'
• il contient en outre une pompe à eau (60) qui est raccordée de façon opérationnelle à l'élément de manoeuvre (40), de telle sorte qu'elle est mise en marche lors d'un actionnement de durée correspondante de l'élément de manoeuvre (40) par le conducteur du véhicule,
• l'unité de processus (50) mentionnée produit un signal de mise en marche pour le moteur électrique pendant la mise en marche de la pompe à eau (60),
• le signal de mise en marche du moteur électrique (10) est retraité de telle façon que le mode de fonctionnement précédent exécuté jusqu'à la mise en marche de la pompe à eau (60) est interrompu et met en marche le moteur électrique de façon continue, après l'écoulement d'un certain temps de mise en marche de la pompe à eau (10); et
• le signal final du fonctionnement de la pompe à eau et le signal de position finale d'un cycle de fonctionnement sont retraités de telle façon que le moteur électrique (10) revient au mode de fonctionnement précédent mentionné, une fois qu'un certain nombre de cycles de fonctionnement de l'essuie-glace s'est terminé, à la suite de celui qui a été réalisé lors du débranchement de la pompe à eau (60).

12. Dispositif selon l'une des revendications 10 ou 11,
caractérisé en ce que
les positions de l'élément de commande (40) sont déterminées pour produire les signaux de mise en marche et de débranchement du moteur électrique (10) par une position d'actionnement de la touche correspondante "de marche" (41) et "d'arrêt" 42, mais est maintenue durablement-et élastiquement dans la position de repos non opérationnelle de l'élément de manoeuvre (40).

13. Dispositif selon la revendication 12,
caractérisé en ce que
l'élément de manoeuvre (40) contient une touche (41, 43) qui provoque la mise en marche de la pompe à eau (50), quand elle est mise à partir d'une position de repos dans une position d'actionnement , et maintient la mise en marche mentionnée, tant qu'elle est maintenue dans cette position d'actionnement; et provoque le débranchement de la pompe à eau (60), quand elle est relâchée par le conducteur du véhicule pour revenir à sa position de repos où elle est maintenue de façon élastique et continue.

14. Dispositif selon la revendication 13,
caractérisé en ce que
• la touche de mise en marche de la pompe à eau (60) est la touche "de marche" (41) pour le signal de mise en marche du moteur électrique (10), et
• en ce que le signal de mise en marche évoqué est alors produit, quand la touche "marche" (41) est revenue dans sa position de repos.

15. Dispositif selon la revendication 13,
caractérisé en ce que
la touche de mise en marche de la pompe à eau (60) est une touche individuelle (43).
